**Europäisches Patentamt**

(19) **European Patent Office**

**Office européen des brevets**

(11) Veröffentlichungsnummer: **0 158 813**
**B1**

(12) **EUROPÄISCHE PATENTSCHRIFT**

(45) Veröffentlichungstag der Patentschrift:
25.11.87

(21) Anmeldenummer: 85102691.4

(22) Anmeldetag: 09.03.85

(51) Int. Cl.⁴: **A 01 D 34/73**

(54) Um eine Achse umlaufende Haltevorrichtung für ein Schneidmesser.

(30) Priorität: 13.03.84 US 589143

(43) Veröffentlichungstag der Anmeldung:
23.10.85 Patentblatt 85/43

(45) Bekanntmachung des Hinweises auf die Patenterteilung:
25.11.87 Patentblatt 87/48

(84) Benannte Vertragsstaaten:
DE FR GB IT SE

(56) Entgegenhaltungen:
FR-A-2 178 415
US-A-2 870 616
US-A-3 877 146
US-A-4 213 289
US-A-4 265 018

(73) Patentinhaber: DEERE & COMPANY, 1 John Deere
Road, Moline Illinois 61265 (US)

(72) Erfinder: Rittenhouse, James L., 5115 Benner Road,
Clayton Michigan 49235 (US)

(74) Vertreter: Feldmann, Bernhard, DEERE &
COMPANY European Office, Patent Department
Steubenstrasse 36- 42 Postfach 503, D-6800
Mannheim 1 (DE)

EP 0 158 813 B1

## Beschreibung

Die Erfindung bezieht sich auf eine um eine Achse umlaufende Haltevorrichtung für ein längliches Schneidmesser, das eine mittig angeordnete Öffnung aufweist, durch die ein in die Haltevorrichtung einsetzbarer Zapfen geführt ist.

Mit derartigen Haltevorrichtungen (John Deere Betriebsanleitung für Self-Propelled Rotary Mower OM-M 83768, Ausgabe 31, Seite 34) wird das Schneidmesser verschraubt. Zum Befestigen oder Lösen ist Werkzeug erforderlich, wobei das Schneidmesser mit der Hand an den Schneidkanten festgehalten werden muß, was zu Verletzungen führen kann (siehe auch US-A-2 870 616 und US-A-4 213 289). Ähnlichen Haltevorrichtungen, die noch Führungslöcher (US-A-4 265 018) oder Fugen (US-A-3 877 146) für den Halt des Schneidmessers aufweisen sind auch bekannt.

Die der Erfindung zugrunde liegende Aufgabe wird darin gesehen, das Schneidmesser ohne Werkzeug befestigen und lösen zu können.

Diese Aufgabe ist nach der Erfindung dadurch gelöst worden, daß die Haltevorrichtung zur Aufnahme des Schneidmessers mit zwei sich gegenüberliegenden und zueinander offenen, durch parallel zur Unterseite der Haltevorrichtung verlaufende Vorsprünge gebildeten Führungsnuten versehen und der Zapfen in der Haltevorrichtung längsverschiebbar angeordnet sowie unter der Wirkung einer Feder in die Öffnung einrastbar ist. Auf diese Weise braucht das Schneidmesser zum Befestigen lediglich in die Führungsnuten eingeschoben zu werden, wobei die Führungsnuten einen sicheren Halt gewährleisten und der Zapfen eine Sicherung gegen Verschieben darstellt. Zum Lösen ist es nur erforderlich, den Zapfen in die Haltevorrichtung zu schieben und das Schneidmesser aus den Führungsnuten zu ziehen. Damit sind Werkzeuge zum Einsetzen und Lösen nicht mehr erforderlich und die Gefahr von Verletzungen ist bei diesen Vorgängen weitgehend ausgeschlossen.

Dadurch, daß die Führungsnuten an ihren Außenseiten Unterbrechungen zum einsetzen eines mit seitlichen Einschnitten versehenen Schneidmessers aufweisen, wird erreicht, daß das Gesamtgewicht der Haltevorrichtung verringert ist und das Schneidmesser beim Einsetzen und Lösen nicht mehr durch die ganze Länge der Führungsnuten gezogen oder geschoben werden muß. Außerdem kann dann bereits beim Einsetzen des Schneidmessers der Zapfen durch die Oberfläche des Schneidmessers zurückgeschoben werden, um dann später selbständig in die Öffnung einzurasten.

Zweckmäßig kann jede Führungsnut u-förmig ausgebildet sein, wobei der außenliegende Schenkel derart unterbrochen ist, daß Vorsprünge entstehen.

In einfacher Weise können nach der Erfindung die Führungsnuten an der Außenseite einer Halteplatte vorgesehen sein, die zugleich die inneren Schenkel der Führungsnuten bildet.

Ein besonders guter Halt für das Schneidmesser ergibt sich dann, wenn die Vorsprünge im Bereich der Drehachse zueinander versetzt ansonsten sich gegenüberliegend angeordnet sind.

Außerdem wird nach der Erfindung vorgeschlagen, daß der Zapfen eine Langbohrung aufweist, durch die ein mit der Haltevorrichtung verbindbarer Haltestift geführt ist.

In der Zeichnung ist ein nachfolgend näher erläutertes Ausführungsbeispiel der Erfindung dargestellt. Es zeigt:

Fig. 1 eine Haltevorrichtung, teilweise im Schnitt,
Fig. 2 die Unterseite der Haltevorrichtung,
Fig. 3 die Haltevorrichtung in Seitenansicht,
Fig. 4 einen Zapfen,
Fig. 5 ein Schneidmesser,
Fig. 6 das in die Haltevorrichtung eingesetzte Schneidmesser und
Fig. 7 Haltevorrichtung mit eingesetztem Schneidmesser in Seitenansicht.

In der Zeichnung ist eine Haltevorrichtung mit 100 bezeichnet, in die ein längeres aber relativ schmales Teil, wie ein Schneidmesser 200, eingesetzt werden kann. Die Haltevorrichtung kann bei einem Rasenmäher Verwendung finden und wird dann umlaufend angetrieben. Die Anwendung ist aber nicht auf Rasenmäher beschränkt und kann überall dort verwendet werden, wo Längsteile um eine Achse drehen, wie beispielsweise in Gebläsen, Fleischwölfen, Futterschneidern oder Propellervorrichtungen.

Die Haltevorrichtung 100 kann frei wählbare Abmessungen aufweisen, um ein entsprechendes Längsteil entsprechender Breite und Stärke aufnehmen zu können.

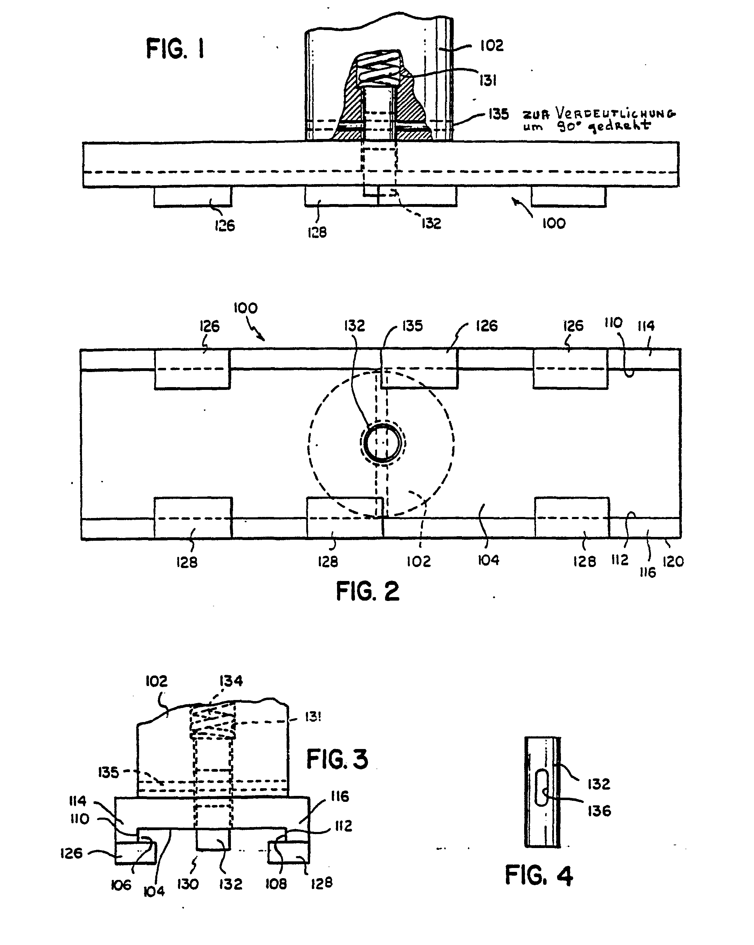

Im einzelnen besteht die Haltevorrichtung 100 aus einem Haltekörper 102, der in geeigneter Weise mit einem Rotationsantrieb verbindbar ist. Zweckmäßig ist der Hältekörper 102 in einem Teilbereich im Querschnitt kreisförmig ausgebildet, wobei dieser Teilbereich mit dem nicht gezeigten Rotationsantrieb verbindbar ist. An diesem Teilbereich schließt sich eine flache Halteplatte 104 an, die das Schneidmesser 200 aufnehmen kann. Hierzu weist die Halteplatte 104, wie aus Fig. 3 zu ersehen ist, zwei Führungsnuten 106 und 108 auf, die im Bereich ihrer Seitenkanten 110 und 112 vorgesehen sind. Die Führungsnuten 106 und 108 werden aus an den Seitenkanten 110 und 112 vorgesehenen Seitenwänden 114 und 116 gebildet, die von der flachen Unterseite der Halteplatte 104 senkrecht nach unten weisen. Mit den Unterseiten dieser Seitenwände 114 und 116 wiederum sind parallel zu der Unterseite der Halteplatte 104 verlaufende plattenförmige Vorsprünge 126 und 128 derart verbunden, daß zwischen der Unterseite der Haltevorrichtung, den Innenwänden der Seitenwände und den Oberseiten der Vorsprünge die Führungsnuten 106 und 108 entstehen. Die Vorsprünge 126 und 128 sind auf der Länge der Halteplatte 104 verteilt, wodurch zwischen den Vorsprüngen Nuten entstehen. Selbstverständlich kann die vorstehend beschriebene Konstruktion auch einstückig ausgebildet werden, wobei lediglich erforderlich ist, daß die Führungsnuten nach unten unterbrochen sind.

In Fig. 3 ist ein mittiges Eingreifteil 130 zu erkennen, das aus einem im kreisförmigen Teilbereich des Haltekörpers 102 vorgesehenen Hohlraum 131 durch eine Öffnung in der Halteplatte 104 nach unten bzw. nach außen gedrückt wird, um in eine Öffnung 202 in dem Schneidmesser 200 eingreifen zu können. Der Eingreifteil 130 besteht aus einem Zapfen 132, der in die Öffnung 202 eingreifen soll, einer Druckfeder 134, die den Zapfen 132 nach außen in Richtung auf das einzusetzende Schneidmesser 200 drückt und einem nicht dargestellten Haltestift, der sicherstellt, daß der Zapfen 132 in dem Hohlraum 131 längsverschiebbar ist und aus dem Hohlraum 131 nicht herausfallen kann. Hierzu ist in dem Haltekörper im kreisförmigen Teilbereich eine radial verlaufende Bohrung 135, die in Fig. 1 um 90° versetzt dargestellt ist, eingearbeitet und der Zapfen 132 ist mit einer Langbohrung 136 versehen. Damit kann der Haltestift sich durch die Langbohrung 136 erstreckend in die Bohrung 135 eingesetzt werden. Zapfen, Druckfeder und Haltestift können aus beliebigem Werkstoff, vorzugsweise metallischem, hergestellt werden. Auch die Abmessungen können beliebig gewählt werden, wobei der Zapfen 132 in dem Hohlraum leicht verschiebbar und möglichst spielfrei einsetzbar sein soll.

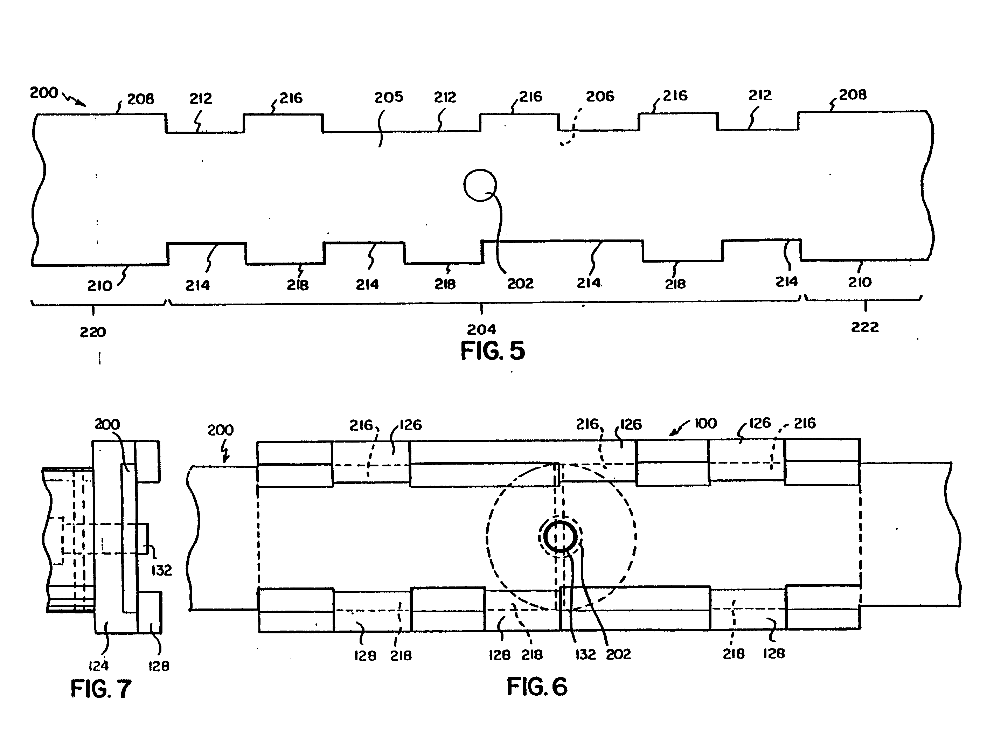

Das in Fig. 5 wiedergegebene Schneidmesser 200 weist in seiner Mitte die Öffnung 202 auf, in der der Eingreifteil 130 bzw. sein Zapfen 132 einrasten soll. Die Öffnung 202 entspricht in ihren Abmessungen dem Querschnitt des unteren Zapfenteils. Zweckmäßig ist sie rund und in einem Befestigungsbereich 204 angeordnet. Bei der Öffnung 202 handelt es sich um eine Durchgangsbohrung, die sich damit von einer Außenseite 205 des Schneidmessers 200 bis zu der anderen Außenseite 206 erstreckt. Die Seitenkanten des Schneidmessers 200 sind mit 208 und 210 bezeichnet und weisen im Befestigungsbereich 204 Einschnitte oder Nuten 212 und 214 auf, wodurch Vorsprünge 216 und 218 entstehen, die so anzuordnen sind, daß sie im eingesetzten Zustand des Schneidmessers 200 mit den Vorsprüngen 126 und 128 der Halteplatte 104 zusammenwirken. Außerhalb des Befestigungsbereichs 204 sind die Seitenkanten 208 und 210 angeschliffen, um Schneidbereiche 220 und 222 zu bilden, die in Fig. 5 nur teilweise dargestellt sind. Die Schneidbereiche können so angeordnet werden, daß bei Verschleiß das Schneidmesser 200 nur umgedreht werden muß.

Aus den Fig. 6 und 7 ist das in die Haltevorrichtung 100 eingesetzte Schneidmesser 200 zu erkennen. Sobald der Zapfen 132 in die Öffnung 202 eingerastet ist, befinden sich die Vorsprünge 216 und 218 zwischen den Vorsprüngen 126 und 128 und der Unterseite der Halteplatte 104. Damit wird das Schneidmesser 200 sicher gehalten. Das Schneidmesser 200 kann ohne Verwendung von Werkzeug dadurch entfernt werden, daß der Zapfen 132 in den Hohlraum 131 gegen die Wirkung der Druckfeder 134 gedrückt wird und das Schneidmesser ein kleines Stück in Längsrichtung soweit verschoben wird, bis die Vorsprünge 216 und 218 zwischen die Vorsprünge 126 und 128 zu liegen kommen. Damit ist das Schneidmesser frei und kann abgenommen werden. Der Befestigungsvorgang verläuft in umgekehrter Reihenfolge, wobei, das Schneidmesser, wenn es sich mit seinen Vorsprüngen 216 und 218 zwischen den Vorsprüngen 126 und 128 befindet, nur leicht gegen die Unterseite der Halteplatte 104 gedrückt wird, so daß der Zapfen über die Außenfläche 205, 206 in den Hohlraum 131 gedrückt wird und selbständig in die Öffnung 202 einrastet, sobald die Öffnung 202 mit der Öffnung in der Halteplatte 104 zur Deckung kommt. Die entsprechenden Vorsprünge 126, 128 und 216, 218 an der Halteplatte 104 und dem Schneidmesser 200 sind mit Bezug auf den Zapfen 132 so anzuordnen, daß sie im eingebauten Zustand des Schneidmessers zusammenwirken. Die Länge der Vorsprünge bzw. ihre gegenseitigen Abstände sind so zu wählen, daß beim entsprechenden Längsverschieben des Schneidmessers 200 die Vorsprünge 216, 218 am Schneidmesser durch die Lücken zwischen benachbarten Vorsprüngen 126, 128 an der Halteplatte 104 austreten können.

**Patentansprüche**

1. Um eine Achse umlaufende Haltevorrichtung (100) für ein längliches Schneidmesser (200), das eine mittig angeordnete Öffnung (202) aufweist, durch die ein in die Haltevorrichtung (100) einsetzbarer Zapfen (132) geführt ist, dadurch gekennzeichnet, daß die Haltevorrichtung (100) zur Aufnahme des Schneidmessers mit zwei sich gegenüberliegenden und zueinander offenen durch parallel zur Unterseite der Haltevorrichtung (100) verlaufen Vorsprünge gebildeten Führungsnuten (106, 108) versehen und der Zapfen (132) in der Haltevorrichtung (100) längsverschiebbar angeordnet sowie unter der Wirkung einer Feder (134) in die Öffnung (202) einrastbar ist.

2. Haltevorrichtung nach Anspruch 1, dadurch gekennzeichnet, daß die Führungsnuten (106, 108) an ihren Außenseiten Unterbrechungen zum Einsetzen eines mit seitlichen Einschnitten versehenen Schneidmessers (200) aufweisen.

3. Haltevorrichtung nach Anspruch 2, dadurch gekennzeichnet daß jede Führungsnut (106, 108) U-förmig ausgebildet ist, wobei der außenliegende Schenkel derart unterbrochen ist, daß Vorsprünge (126, 128) entstehen.

4. Haltevorrichtung nach einem oder mehreren der vorherigen Ansprüche, dadurch gekennzeichnet, daß die Führungsnuten (106, 108) an der Außenseite einer Halteplatte (104) vorgesehen sind, die zugleich die inneren Schenkel der Führungsnuten bildet.

5. Haltevorrichtung nach Anspruch 3, dadurch gekennzeichnet, daß die Vorsprünge (126, 128) im Bereich der Drehachse zueinander versetzt ansonsten sich gegenüberliegend angeordnet sind.

6. Haltevorrichtung nach einem oder mehreren der vorhergehenden Ansprüche, dadurch gekennzeichnet, daß der Zapfen (132) eine Langbohrung (136) aufweist, durch die ein mit der Haltevorrichtung (100) verbindbarer Haltestift geführt ist.

**Revendications**

1. Dispositif de fixation (100) tournant autour d'un axe pour un couteau allongé (200), qui comporte une ouverture (202) disposée centralement par laquelle passe une cheville (132) pouvant être introduite dans le dispositif de fixation (100), caractérisé en ce que le dispositif de fixation (100) comporte, pour recevoir le couteau, deux rainures de guidage (106, 108) opposées et ouvertes l'une vers l'autre, formées par des saillies s'étendant parallèlement à la face inférieure du dispositif de fixation (100), et en ce que la cheville (132) est disposée de façon à pouvoir se déplacer longitudinalement dans le dispositif de fixation (100), ainsi qu'à pouvoir s'engager dans l'ouverture (202) sous l'action d'un ressort (134).

2. Dispositif de fixation selon la revendication 1, caractérisé en ce que les rainures de guidage (106, 108) comportent sur leurs côtés extérieurs des interruptions pour introduire un couteau (200) comportant des encoches latérales.

3. Dispositif de fixation selon la revendication 2, caractérisé en ce que chaque rainure de guidage (106, 108) est conformée en U, la branche extérieure étant interrompue de façon à former des saillies (126, 128).

4. Dispositif de fixation selon une ou plusieurs des revendications précédentes, caractérisé en ce que les rainures de guidage (106, 108) sont prévues sur la face extérieure d'une plaque de fixation (104) qui forme en même temps les branches intérieures des rainures de guidage.

5. Dispositif de fixation selon la revendication 3, caractérisé en ce que les saillies (126, 128) sont disposées avec décalage mutuel dans la zone de l'axe de rotation, sinon en regard.

6. Dispositif de fixation selon une ou plusieurs des revendications précédentes, caractérisé en ce que la cheville (132) comporte un alésage longitudinal (136) par lequel passe une broche de fixation pouvant être reliée au dispositif de fixation (100).

**Claims**

1. A holding device (100) rotatable about an axis, for an elongate cutting blade (200) having a centrally arranged opening (202) through which is passed a pin (132) which can be inserted into the holding device (100), characterised in that to receive the cutting blade the holding device (100) is provided with two mutually oppositely disposed guide grooves (106, 108) which are open towards each other and which are formed by projections extending parallel to the underside of the holding device (100), and the pin (132) is longitudinally slidably arranged in the holding device (100) and can be engaged into the opening (202) under the force of a spring (134).

2. A holding device according to claim 1 characterised in that the guide grooves (106, 108) are provided at their outsides with interruptions for insertion of a cutting blade (200) which is provided with lateral notches.

3. A holding device according to claim 2 characterised in that each guide grooves (106, 108) is of a U-shaped configuration, the outward limb being interrupted in such a way as to form projections (126, 128).

4. A holding device according to one or more of the preceding claims characterised in that the guide grooves (106, 108) are provided at the outward side of a holding plate (104) which at the same time form the inner limbs of the guide grooves.

5. A holding device according to claim 3 characterised in that the projections (126, 128) are arranged in displaced relationship with each other in the region of the axis of rotation but otherwise are arranged in mutually opposite relationship.

6. A holding device according to one or more of the preceding claims characterise in that the pin (132) has an elongated bore (136) through which is passed a holding pin which can be oonnected to the holding device (100).

0 158 813

**FIG. 1**

102
131
135   ZUR VERDEUTLICHUNG
um 90° gedreht

126          128          132          100

100

126   132   135   126   126   110  114

128      128      102      104      128  112   120   116

**FIG. 2**

102   134

131

135

114
110

116
112

126

106  104  130  132  108  128

**FIG. 3**

132
136

**FIG. 4**

1

**FIG. 5**

**FIG. 7**

**FIG. 6**

0 158 813